# EUROPÄISCHE PATENTSCHRIFT

(11) **EP 1 558 467 B1**
(45) Veröffentlichungstag und Bekanntmachung des Hinweises auf die Patenterteilung: **10.05.2006**
(21) Anmeldenummer: 03773662.6
(22) Anmeldetag: 24.10.2003
(51) Int. Cl.: B60Q 7/00, G09F 13/16, E01F 9/012

(54) **GESTELL FÜR WARNDREIECKE**
HOLDER FOR WARNING TRIANGLES
CHASSIS POUR TRIANGLES DE SIGNALISATION

(30) Priorität: 25.10.2002 DE 10250042
(43) Veröffentlichungstag der Anmeldung: 03.08.2005
(73) Patentinhaber: Geka Günter & Kastl GmbH, 73054 Eislingen (DE)
(72) Erfinder: FEYL, Uwe, 73054 Eislingen (DE); DUONG, Chau, 73054 Eislingen (DE)
(74) Vertreter: Jeck, Anton
(86) Internationale Anmeldenummer: PCT/EP2003/011837
(87) Internationale Veröffentlichungsnummer: WO 2004/037609

(56) Entgegenhaltungen:
- EP-A- 0 819 577
- EP-A- 0 864 464
- DE-A- 10 054 656
- DE-C- 10 008 067

## Beschreibung

Die Erfindung betrifft ein Gestell nach dem Oberbegriff des Anspruches 1.

Bei herkömmlichen Gestellen der eingangs genannten Art, wie sie z.B. in der EP 864 464 offenbart sind, sind die Standbeine mit dem Basiskörper über jeweils eine Lagerpartie gelenkig verbunden, wobei die Enden der Standbeine in dafür vorgesehene Öffnungen gesteckt sind. Hierdurch bekommen die Standbeine ein unerwünschtes Spiel. Zudem sind die Endpartien des Basiskörpers massiv ausgebildet, um die erforderliche Stabilität zu erreichen.

Ausgehend von dem obigen Stand der Technik liegt der Erfindung die Aufgabe zugrunde, das gattungsgemäße Gestell ohne unangemessenen konstruktiven Aufwand so weiterzubilden, dass der Zusammenbau des Gestells mit weniger Materialaufwand, höherer Geschwindigkeit und sicherer Lagerung der einzelnen Teile erfolgen kann.

Die gestellte Aufgabe wird erfindungsgemäß durch die Merkmale des Anspruches 1 gelöst.

Man erkennt, dass die Erfindung jedenfalls dann verwirklicht ist, wenn es sich um ein Gestell handelt, dessen Basiskörper an seinen beiden Endseiten Lageröffnungen aufweist, in welche die beiden Standbeine durch Steckverbindungen gelenkig anorderbar sind. Dabei weist das eine Standbein eine Öffnung auf, während das zweite Standbein einen Zapfen trägt, der zunächst die Lageröffnung der Endpartie durchquert und anschließend durch die Öffnung des zweiten Standbeines gesteckt wird. Der Zapfen ist dabei so bemessen, dass er beide Öffnungen durchquert und aus der Öffnung des Lagerkörpers herausragt, jedoch die drei Teile gelenkig und betriebsgemäß zusammenhält.

Weitere zweckmäßige und vorteilhafte Ausgestaltungen der Erfindung gehen aus den Unteransprüchen der Erfindung hervor.

Eine besonders zweckmäßige Ausgestaltung sieht vor, dass der Lagerkörper sowie der Zapfen separate Teile sind, die mit den Standbeinen betriebsgemäß verbindbar sind. Auf diese Weise können die regelmäßig aus Metall oder Kunststoff bestehenden Standbeine als Stäbe ausgebildet werden, die danach mit dem Lagerkörper bzw. Zapfen durch Steckverbindungen verbindbar sind.

Eine weitere Ausgestaltung sieht vor, dass der Zapfen Teil eines Steckkörpers ist, der sowohl mit denn Standbeinen als auch mit dem Lagerkörper sowie dem Basiskörper gelenkig verbindbar ist.

Eine weitere zweckmäßige Ausgestaltung sieht vor, dass der Steckkörper und der Lagerkörper Anschlagpartien besitzen, die mit den Anschlagkörpern des Basiskörpers zusammenarbeiten. Im Rahmen dieses Erfindungsgedankens ist es zweckmäßig, wenn die Anschlagkörper die Ruhestellung sowie die Betriebsstellung der Standbeine definieren. Durch diese Maßnahmen ist erreichbar, dass die Standbeine immer eine definierte Arbeits- bzw. Ruhestellung einnehmen können.

Eine weitere zweckmäßige Ausgestaltung sieht vor, dass der Zapfen eine Halspartie mit einer Öffnung sowie einer elastisch verformbaren Kopfpartie aufweist, deren Durchmesser im entspannten Zustand größer ist als der Durchmesser der Öffnung und die sich auf der freien Seite des Lagerkörpers abstützen. Durch diese Maßnahmen wird eine flexible Steckverbindung zwischen den einzelnen Teilen hergestellt, die ohne weiteres gelöst werden kann. Durch diese Maßnahme wird nicht nur die Herstellung der Beine, sondern auch der eigentlichen Steckverbindung deutlich vereinfacht.

Ein Ausführungsbeispiel der Erfindung ist in der Zeichnung schematisch dargestellt und ist im Folgenden erläutert. Es zeigen:
- Fig. 1: ein Warndreieck im zusammengeklappten Zustand,
- Fig. 2: den mit II bezeichneten Teil nach Fig. 1 vergrößert dargestellt,
- Fig. 3: den Teil nach Fig. 2, jedoch ohne Standbeine,
- Fig. 4: einen Steckkörper in perspektivischer Ansicht,

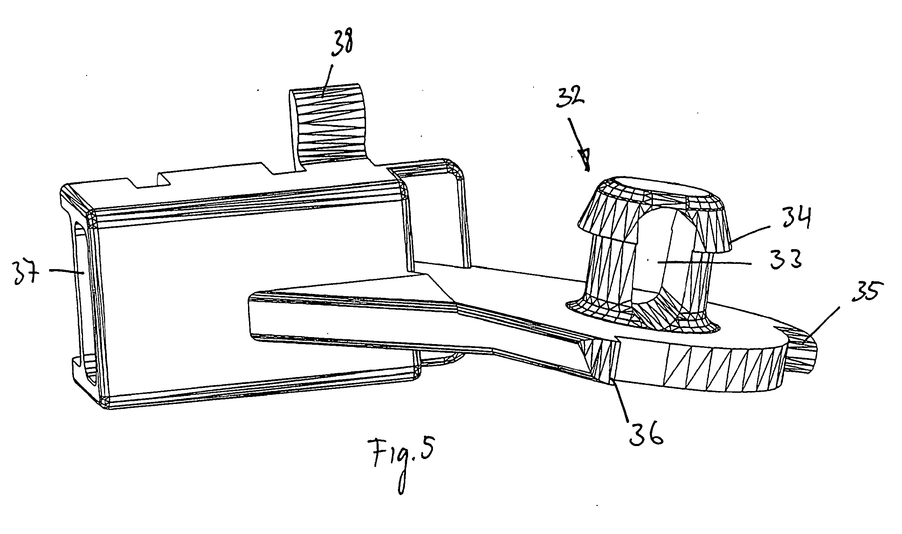

- Fig. 5: den Steckkörper nach Fig. 4 in einer anderen perspektivischen Ansicht,

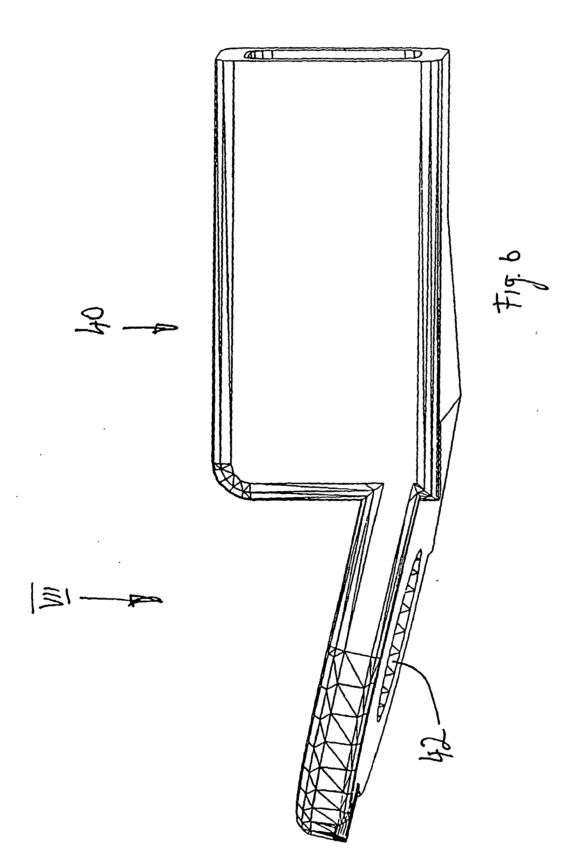

- Fig. 6: einen Lagerkörper in Seitenansicht,

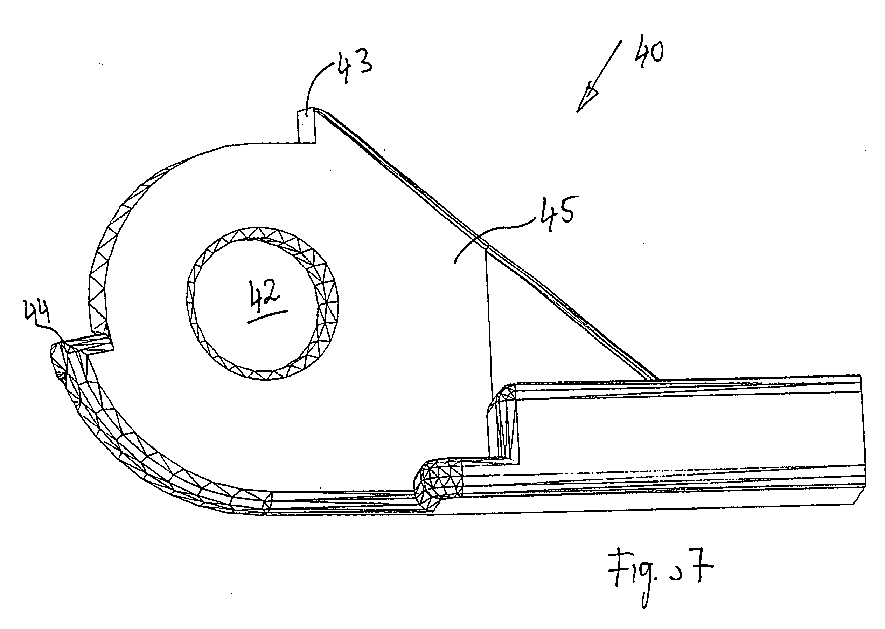

- Fig. 7: den Lagerkörper nach Fig. 6 in Richtung des Pfeiles VII.

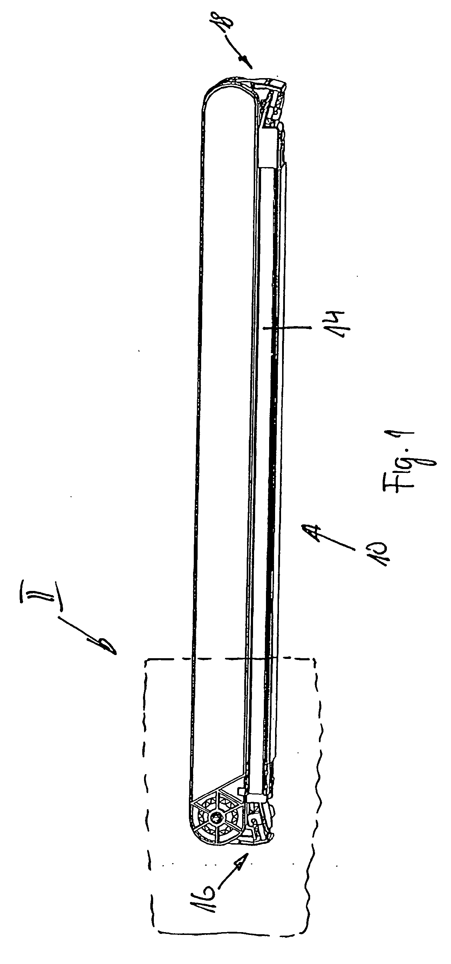

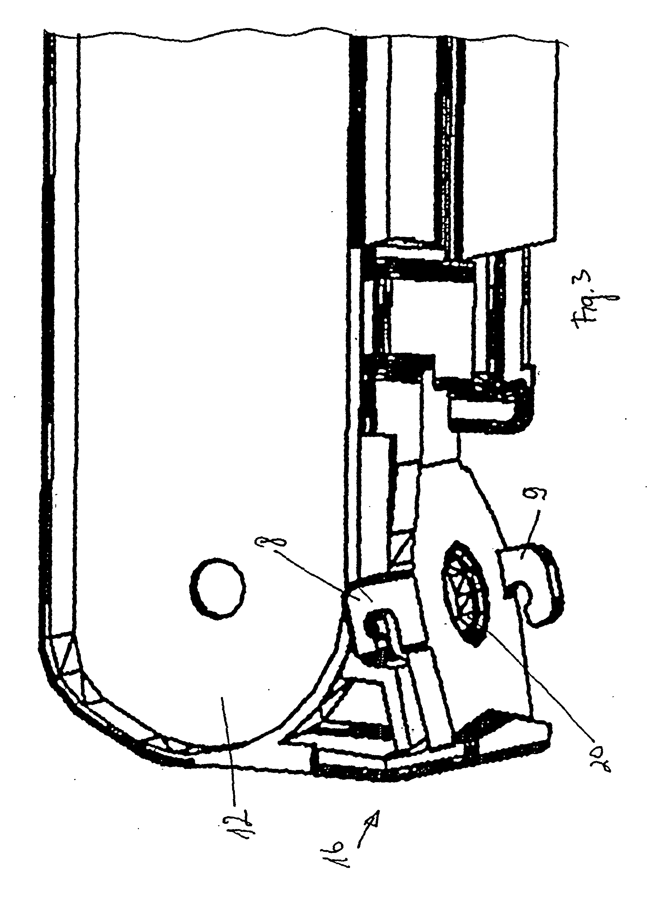

In den Fig. 1 bis 3 ist ein zusammengeklapptes Warndreieck für Kraftfahrzeuge dargestellt, das drei rückstrahlende Leisten aufweist, von denen je eine Leiste mit den Enden der dritten Basisleiste schwenkbar verbunden ist.

Das Gestell 10 für Warndreiecke weist einen waagerecht ausgerichteten Basiskörper 12 auf, an dem endseitig Standbeine 14 angelenkt sind und der im Bereich seiner Endpartien 16, 18 Lageröffnungen 20 für die Standbeine 14 aufweist. Das eine Standbein ist an dem Basiskörper 12 über einen Lagekörper 40, 42 angelenkt, während das zweite Standbein 14 einen die Lageröffnung 20 des Basiskörpers 12 sowie die Öffnung 42 des Lagerkörpers 40 durchquerenden Zapfen 32 trägt.

Der Lagerkörper 40 sowie der Zapfen 32 sind separate Teile, die mit den Standbeinen 14 betriebsgemäß verbindbar sind. Der Zapfen 32 ist Teil eines Steckkörpers 30, der sowohl mit dem Standbein 14 als auch mit dem Lagerkörper 40 sowie dem Basiskörper 12 durch Stecken verbindbar ist.

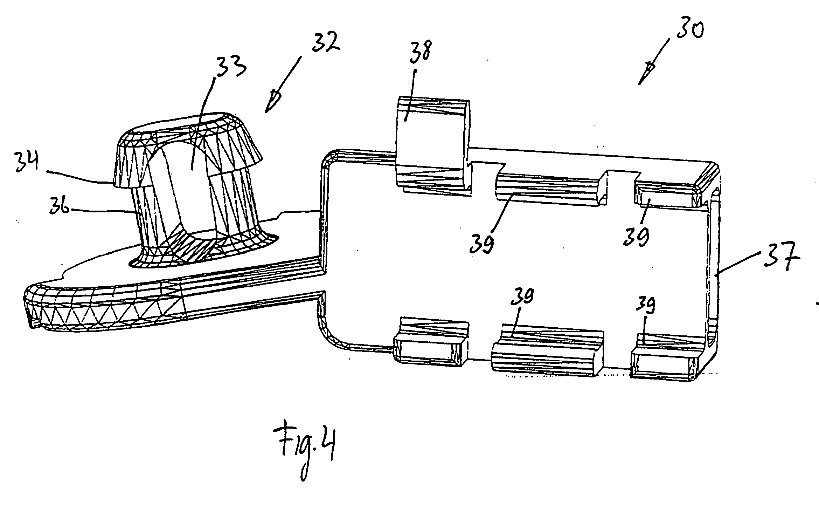

Man erkennt, dass der Steckkörper 30 und der Lagerkörper 40 Anschlagpartien 35, 36; 43, 44 besitzen, die mit Anschlagkörpern 8, 9 des Basiskörpers 12 zusammenarbeiten. Die Aufgabe der Anschlagkörper 8, 9 ist, die Ruhestellung sowie die Betriebsstellung der Standbeine 14 beim Aus- oder Einschwenken der Standbeine 14 zu definieren. Ferner lässt Fig. 4 erkennen, dass der Zapfen 32 eine Halspartie 36 mit einer Öffnung 33 sowie eine elastisch verformbare Kopfpartie 34 aufweist, deren Durchmesser im entspannten Zustand größer ist als der Durchmesser der Öffnung 42. Die Kopfpartie 34 stützt sich auf der freien Seite 45 des Lagerkörpers 40 ab. Der Durchmesser der zylindrischen Halspartie 36 entspricht dem Durchmesser der Lageröffnung 20 und dem Durchmesser der Öffnung 42.

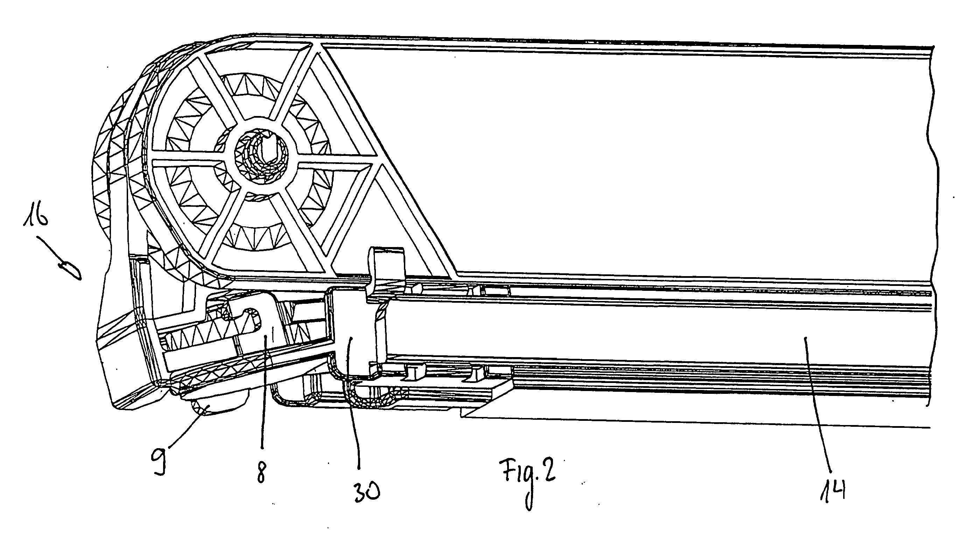

Die Fig. 2 lässt im Zusammenhang mit Fig. 4 erkennen, dass das Standbein 14 im eingeklappten Zustand von Vorsprüngen 39 festgehalten wird, die elastisch verformbar sind. Das von dem Steckkörper 30 getragene Standbein ist in der Ausnehmung 37 eingesteckt. Der Vorsprung 38 nach Fig. 4 dient als Anschlag des Steckkörpers 30 an Basiskörper 12.

## Patentansprüche

1. Gestell (10) für Warndreiecke mit einem waagerecht ausgerichteten Basiskörper (12), an dem endseitig Standbeine (14) angelenkt sind und der im Bereich seiner Endpartien (16, 18) Lageröffnungen (20) für die Standbeine (14) aufweist,
**dadurch gekennzeichnet,**
**dass** das eine Standbein an den Basiskörper (12) über einen Lagerkörper (40) mit Öffnung (42) angelenkt ist, während das zweite Standbein (14) einen die Lageröffnung (20) des Basiskörpers (12) sowie die Öffnung (42) des Lagerkörpers (40) durchquerenden Zapfen (32) trägt.

2. Gestell nach Anspruch 1,
**dadurch gekennzeichnet,**
**dass** der Lagerkörper (40) sowie der Zapfen (32) separate Teile sind, die mit den Standbeinen (14) betriebsgemäß verbindbar sind.

3. Gestell nach Anspruch 1 oder 2,
**dadurch gekennzeichnet,**
**dass** der Zapfen (32) Teil eines Steckkörpers (30) ist, der sowohl mit dem Standbein (14) als auch mit dem Lagerkörper (40) sowie dem Basiskörper (12) gelenkig verbindbar ist.

4. Gestell nach einem der Ansprüche 1 bis 3,
**dadurch gekennzeichnet,**
**dass** der Steckkörper (30) und der Lagerkörper (40) Anschlagpartien (35, 36; 43, 44) besitzen, die mit Anschlagkörpern (8, 9) des Basiskörpers (12) zusammenarbeiten.

5. Gestell nach einem der Ansprüche 1 bis 4,
**dadurch gekennzeichnet,**
**dass** die Anschlagkörper (8, 9) die Ruhestellung sowie die Betriebsstellung der verschwenkbaren Standbeine (14) definieren.

6. Gestell nach einem der Ansprüche 1 bis 5,
**dadurch gekennzeichnet,**
**dass** der Zapfen (32) eine Halspartie (36) mit einer Öffnung (33) sowie eine elastisch verformbare Kopfpartie (34) aufweist, deren Durchmesser im entspannten Zustand größer ist als der Durchmesser der Öffnung (42), und die sich auf der freien Seite (45) des Lagerkörpers abstützt.

7. Gestell nach einem der Ansprüche 1 bis 6,
**dadurch gekennzeichnet,**
**dass** der Durchmesser der zylindrischen Halspartie (36) dem Durchmesser der Lageröffnung (20) und dem Durchmesser der Öffnung (42) entspricht.

## Claims

1. Frame (10) for warning triangles having a horizontally orientated basic body (12), to which support legs (14) are coupled on the end-side and which has bearing openings (20) for the support legs (14) in the region of its end parts (16, 18),
**characterised in that**
the one support leg is coupled to the basic body (12) via a bearing body (40) with an opening (42), whilst the second support leg (14) carries a pin (32) which traverses the bearing opening (20) of the basic body (12) and also the opening (42) of the bearing body (40).

2. Frame according to claim 1,
**characterised in that**
the bearing body (40) and also the pin (32) are separate parts which can be connected to the support legs (14) in operation.

3. Frame according to claim 1 or 2,
**characterised in that**
the pin (32) is part of a plug-in body (30) which can be connected both to the support leg (14) and to the bearing body (40) and also to the basic body (12) in an articulated manner.

4. Frame according to one of the claims 1 to 3,
**characterised in that**
the plug-in body (30) and the bearing body (40) have limit stop parts (35, 36; 43, 44) which cooperate with limit stop bodies (8, 9) of the basic body (12).

5. Frame according to one of the claims 1 to 4,
**characterised in that**
the limit stop bodies (8, 9) define the inoperative position and also the operational position of the pivotable support legs (14).

6. Frame according to one of the claims 1 to 5,
**characterised in that**
the pin (32) has a throat part (36) with an opening (33) and also an elastically deformable head part (34), the diameter of which in the unstressed state is greater than the diameter of the opening (42) and which is supported on the free side (45) of the bearing body.

7. Frame according to one of the claims 1 to 6,
**characterised in that**
the diameter of the cylindrical throat part (36) corresponds to the diameter of the bearing opening (20) and to the diameter of the opening (42).

## Revendications

1. Châssis (10) pour triangles de signalisation,, comprenant un corps (12) de base dirigé horizontalement sur lequel des jambages (14) sont articulés du côté de l'extrémité et qui a, dans la zone de ses parties (16, 18) d'extrémité, des ouvertures (20) de palier pour les jambages (14),
**caractérisé**
**en ce que** l'un des jambage est articulé au corps (12) de base par un corps (40) de palier ayant une ouverture (42), tandis que le deuxième jambage (14) porte un embout (32) passant dans l'ouverture (20) de palier du corps (12) de base ainsi que dans l'ouverture (42) du corps (40) de palier.

2. Châssis suivant la revendication 1,
**caractérisé**
**en ce que** le corps (40) de palier, ainsi que l'embout (32) sont des pièces distinctes qui peuvent être assemblées en fonction du fonctionnement au jambage (14).

3. Châssis suivant la revendication 1 ou 2,
**caractérisé**
**en ce que** l'embout (32) fait partie d'un corps (30) à emmancher, qui peut être articulé tant au jambage (14) qu'également au corps (40) de palier ainsi qu'au corps (12) de base.

4. Châssis suivant l'une des revendications 1 à 3,
**caractérisé**
**en ce que** le corps (30) à emmancher et le corps (40) de palier ont des parties (35, 36, 43, 44) de butée, qui coopèrent avec des corps (8, 9) de butée du corps (12) de base.

5. Châssis suivant l'une des revendications 1 à 4,
**caractérisé**
**en ce que** les corps (8, 9) de butée définissent la position de repos ainsi que la position de fonctionnement des jambages (14) qui peuvent pivoter.

6. Châssis suivant l'une des revendications 1 à 5,
**caractérisé**
**en ce que** l'embout (32) a une partie (36) de collet ayant une ouverture (33), ainsi qu'une partie (34) de tête déformable élastiquement, dont le diamètre a l'état détendu est plus grand que le diamètre de l'ouverture (42) et qui s'appuie sur le côté (45) libre du corps de palier.

7. Châssis suivant l'une des revendications 1 à 6,
**caractérisé**
**en ce que** le diamètre de la partie (36) cylindrique de collet correspond au diamètre de l'ouverture (20) de palier et au diamètre de l'ouverture (42).
